# EUROPÄISCHE PATENTSCHRIFT

(11) **EP 1 924 845 B1**
(45) Veröffentlichungstag und Bekanntmachung des Hinweises auf die Patenterteilung: **15.07.2015**
(21) Anmeldenummer: 06777112.1
(22) Anmeldetag: 29.08.2006
(51) Int. Cl.: G01N 21/90, B29C 49/78

(54) **VERFAHREN ZUR QUALITÄTSKONTROLLE VON KUNSTSTOFFBEHÄLTERN**
METHOD FOR QUALITY CONTROL OF PLASTIC CONTAINERS
PROCEDE POUR CONTROLER LA QUALITE DE CONTENANTS PLASTIQUES

(30) Priorität: 15.09.2005 DE 102005044206
(43) Veröffentlichungstag der Anmeldung: 28.05.2008
(73) Patentinhaber: Krones AG, 93073 Neutraubling (DE)
(72) Erfinder: DETROIS, Christian, 1066 Epalinges (CH); LINDNER, Peter, 84085 Langquaid (DE); KWIRANDT, Rainer, 93092 Barbing (DE); NIEDERMEIER, Anton, 93326 Abensberg (DE); PIANA, Stefan, 93096 Köfering (DE)
(74) Vertreter: Grünecker Patent- und Rechtsanwälte PartG mbB
(86) Internationale Anmeldenummer: PCT/EP2006/008448
(87) Internationale Veröffentlichungsnummer: WO 2007/031194

(56) Entgegenhaltungen:
- WO-A-97/46329
- DE-A1- 19 741 384
- DE-C1- 19 914 028
- US-A- 5 591 462
- US-B1- 6 473 169

## Beschreibung

Die Erfindung bezieht sich auf ein Verfahren zur Qualitätskontrolle eines streckgeblasenen Kunststoffbehälters sowie ggf. zur Überwachung und Regelung des Streckblasprozesses der im Oberbegriff von Anspruch 1 erläuterten Art.

Ein Verfahren zur Qualitätskontrolle ist aus der US-A-6 872 895 bekannt. Das bekannte Verfahren bestimmt die Verhältnisse am Boden eines streckgeblasenen Kunststoffbehälters als Indikativ für einen erfolgreich und korrekt durchgeführten Streckblas-Formvorgang. Allerdings werden beim bekannten Verfahren lediglich die Masse bzw. das Volumen des Materials im Boden des Kunststoffbehälters festgestellt. Zu diesem Zweck werden die Absorptionsmerkmale des gesamten Bodens bzw. eines ausgewählten Bereichs des Bodens festgestellt und daraus auf die Masse bzw. das Volumen des im Boden nach dem Streckblasvorgang noch vorhandenen Materials geschlossen. In die Absorptionsmessung gehen jedoch auch die Qualität des Kunststoffbehälters nicht beeinflussende Merkmale, wie beispielsweise leichte Trübungen oder dgl. ein, die die Messung verfälschen können. Darüber hinaus sind aussagekräftige Absorptionsmessungen relativ kompliziert. Eine flächenintegrierende Absorptionsmessung mit einem nicht ortsauflösenden Sensor ist wegen der nichtlinearen Eigenschaften des Absorptionsgesetzes wenig aussagekräftig und mit einem ortsauflösenden Sensor vor allem im Bereich des Infrarotlichts äußerst aufwendig.

Es ist weiterhin, beispielsweise aus der DE 199 14 028 bekannt, die Qualität eines streckgeblasenen Kunststoffbehälters dadurch festzustellen, dass im Durchlichtverfahren die äußeren Konturen verschiedener Bereiche des Behälters und ihr Verhältnis zueinander festgestellt wird. Mit diesem Verfahren können jedoch nicht alle Abweichungen sicher erfasst werden.

Es sind weiterhin die unterschiedlichsten Verfahren zur Wandstärkenbestimmung bei streckgeblasenen Kunststoffbehältern bekannt, beispielsweise aus der DE-A-101 16 665. Eine Wandstärkenmessung muss jedoch an den unterschiedlichsten Stellen des Kunststoffbehälters erfolgen, um für die Qualität des Gesamtbehälters aussagekräftig zu sein. Bei dem in dieser Druckschrift beschriebenen Verfahren können analog zur Wandstärke auch andere Parameter, wie z.B. die Dichte, bestimmt werden. Das bekannte Verfahren ist somit relativ aufwendig.

Aus der US 6,473,169 B1 ist es bekannt, zur Qualitätskontrolle den Boden eines Kunststoffbehälters zu untersuchen. Es wird dabei die Lage des Anspritzpunktes ermittelt und im Falle einer zu starken Abweichung von der Sollposition ein Signal erzeugt, das darauf hinweist, dass die Flasche schlecht ist.

Der Erfindung liegt somit die Aufgabe zugrunde, ein einfaches und wenig störanfälliges Verfahren zur Qualitätskontrolle eines streckgeblasenen Kunststoffbehälters sowie zur Überwachung und Regelung des Streckblasprozesses bereitzustellen.

Die Aufgabe wird durch die im Anspruch 1 angegebenen Merkmale gelöst.

Der Erfindung liegt die Erkenntnis zugrunde, dass beim Verstrecken des Bodens eines Kunststoffbehälters je nach Prozesssteuerung unterschiedliche charakteristische Materialverteilungen im Boden entstehen. Diese Inhomogenitäten können mit spezieller erfindungsgemäßer Beleuchtung hervorgehoben und mit elektronischer Kameratechnik vor allem auch im sichtbaren Licht ortsauflösend aufgenommen werden. Mit erfindungsgemäßen Bildverarbeitungsalgorithmen werden die charakteristischen Materialverteilungen vermessen und daraus charakteristische Kennzahlen wie z.B. die Flächengröße eines unverstreckt und/oder nur leicht verstreckt gebliebenen Bereiches am Boden des Kunststoffbehälters und/oder die Größe und Lage des Übergangsbereichs zwischen unverstrecktem und verstrecktem Bereich ermittelt. Damit kann auf einfache Weise ein Parameter bereitgestellt werden, der sehr aussagekräftig für die Qualität des Streckblasvorgangs bzw. die Qualität des streckgeblasenen Kunststoffbehälters ist. Der dadurch gewonnene Informationsgehalt ist wesentlich höher als bei herkömmlichen Verfahren wie der Bestimmung der Sektionsgewichte oder der Wandstärke an einzelnen Punkten der Seitenwand.

Die charakteristischen Materialverteilungen werden sichtbar gemacht, indem der Keilwinkel zwischen Innen- und Außenwandung durch gerichtetes Licht erfasst wird. Denkbar ist dabei auch eine Kombination mehrerer unterschiedlich stark gerichteter Beleuchtungen. Materialspannungen können gemäß einem nicht unter die Erfindung fallenden Beispiel mit Hilfe von polarisiertem Licht sichtbar gemacht werden. Gemäß einem nicht unter die Erfindung fallenden Beispiel kann im Fall durchgefärbter Behältermaterialien auch die Absorption im sichtbaren Wellenlängenbereich sichtbar gemacht werden. Gemäß nicht unter die Erfindung fallenden Beispielen ist es auch möglich, Beleuchtungen unterschiedlicher Wellenlängen im sichtbaren oder infraroten oder ultravioletten Wellenlängenbereich oder unterschiedlicher Polarisationsrichtungen zu verwenden.

Je nachdem, was einfacher realisierbar ist, kann dieses Verfahren auf den gesamten Behälterboden oder auf Teilbereiche angewandt werden.

Die Bestimmung im Durchlichtverfahren ist besonders bevorzugt und eignet sich auch besonders gut für lichtdurchlässige PET-Kunststoffflaschen.

Die im Verfahren bestimmten charakteristischen Kennzahlen werden bevorzugt zum Steuern des Streckblasverfahrens mittels Regelung der Prozeßparameter eingesetzt.

Da das Verfahren gleichzeitig eine Online Qualitätskontrolle aller produzierten Behälter darstellt und die Produktqualität auch von mehrfach vorhandenen Produktionswerkzeugen wie z.B. die Kavitäten der Streckblasmaschine abhängig ist, wird bevorzugt eine statistische Zuordnung der gemessenen Behälterqualität auf die jeweiligen Produktionswerkzeuge vorgenommen.

Ausführungsbeispiele der Erfindung werden nachfolgend anhand der Zeichnungen näher erläutert. Es zeigen:
- Fig. 1: eine schematische Darstellung einer Vorrichtung zur Qualitätskontrolle zur Verwendung im erfindungsgemäßen Verfahren,
- Fig. 2: eine schematische Darstellung einer nach einem ersten Ausführungsbeispiel bestimmten Flächengröße,
- Fig. 3: eine schematische Darstellung einer nach einem weiteren Ausführungsbeispiel bestimmten Flächengröße,
- Fig. 4: eine fotografische Darstellung einer nach einem weiteren Ausführungsbeispiel bestimmten Flächengröße, und
- Fig. 5: eine fotografische Darstellung einer nach einem weiteren Ausführungsbeispiel bestimmten Flächengröße.

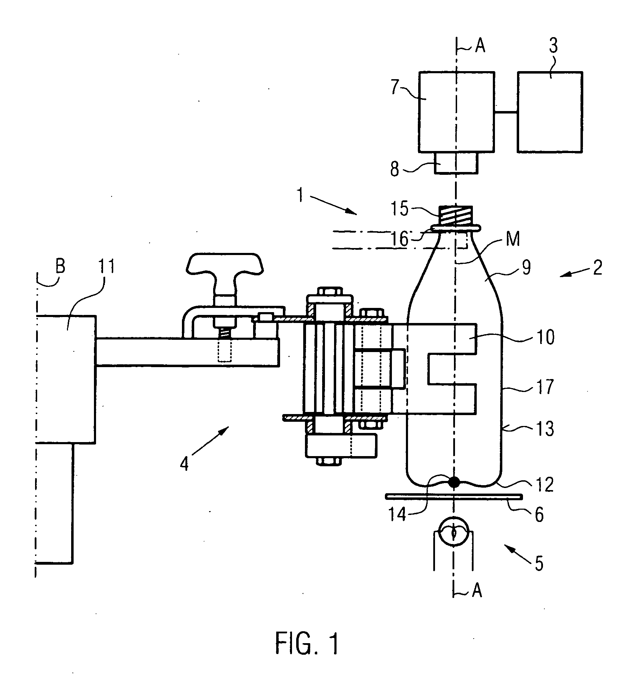

Fig. 1 zeigt ein Ausführungsbeispiel einer Vorrichtung 1 zum Durchführen des erfindungsgemäßen Verfahrens. Die Vorrichtung 1 umfasst eine Kontrollstation 2, eine Auswertungseinrichtung 3 und eine Transporteinrichtung 4. Durch die Transporteinrichtung 4 wird ein zu inspizierender Kunststoffbehälter 9, dargestellt ist eine Kunststoffflasche, bevorzugt aus PET, von einem Klammerelement 10 boden- und mündungsfrei gehalten.

Der Behälter 9 ist im Wesentlichen rotationssymmetrisch zu einer Längsachse M ausgebildet. Die Wandung 13 des Behälters 9 weist einen mit Außengewinde versehenen Mündungsbereich 15 mit seitlich überstehendem Tragring 16 und einen unterhalb des Tragrings 16 befindlichen, über den Tragring 16 seitlich überstehenden, im Wesentlichen zylinderförmigen Bauchbereich 17 auf, der den größten Außendurchmesser des Behälters 9 bildet. Der Bauchbereich 17 mündet in einen Boden 12, der als Standfuß ausgebildet ist. An der Außenseite des Bodens 12 befindet sich ein Anspritzpunkt 14.

Der Transportstern 11 mit der Drehachse B enthält eine Vielzahl der dargestellten Transporteinrichtungen 4. Der Transportstern 11 ist nach, bevorzugt unmittelbar nach, einer herkömmlichen, nicht gezeichneten Streckformblasmaschine zum Herstellen der Kunststoffbehälter 9 angeordnet, kann jedoch auch an anderer Stelle angeordnet sein. Es sollte jedoch bevorzugt eine exakte Zuordnung jedes Behälters 9 zu Stationen seiner Herstellung möglich sein. In dieser Streckformblasmaschine werden Vorformlinge durch Blasen in die gewünschte Endform gebracht, wobei der Vorformling unter Verringerung seiner Wandstärke verstreckt und vergrößert wird.

Der Transportstern 11 führt die ausgeformten und verstreckten Kunststoffbehälter 9 durch die Kontrollstation 2 zur Qualitätskontrolle.

Die Kontrollstation 2 ist als Durchleuchtungseinrichtung ausgebildet und enthält eine stationäre Lichtquelle 5, gegebenenfalls eine optische Einheit 6, einen Sensor 7, bevorzugt eine Kamera (Matrixkamera) und ein Abbildungsobjektiv 8. Die optische Achse A der optischen Bestandteile der Kontrollstation 2 ist so angeordnet, dass sie mit der Mittellinie M eines korrekt geformten Kunststoffbehälters 9 zusammenfällt, wenn dieser durch die Kontrollstation 2 transportiert wird. Dabei befindet sich die Lichtquelle 5 mit den gegebenenfalls der Lichtquelle 5 zugeordneten optischen Bestandteilen unterhalb des Bodens 12 des Behälters 9, während der Sensor 7 mit den ihm zugeordneten Bestandteilen an der Seite der Mündung 15 des Behälters 9 angeordnet und in die Mündungsöffnung gerichtet ist. Der Sensor 7 ist mit der Auswerteinrichtung 3 verbunden.

Die optische Einheit 6 kann beispielsweise eine Blende, eine Richtfolie und/oder ein Linsensystem oder andere optische Einheiten enthalten, die in der Lage sind, gerichtetes, insbesondere stark gerichtetes, sogenanntes hartes, Licht zu erzeugen.

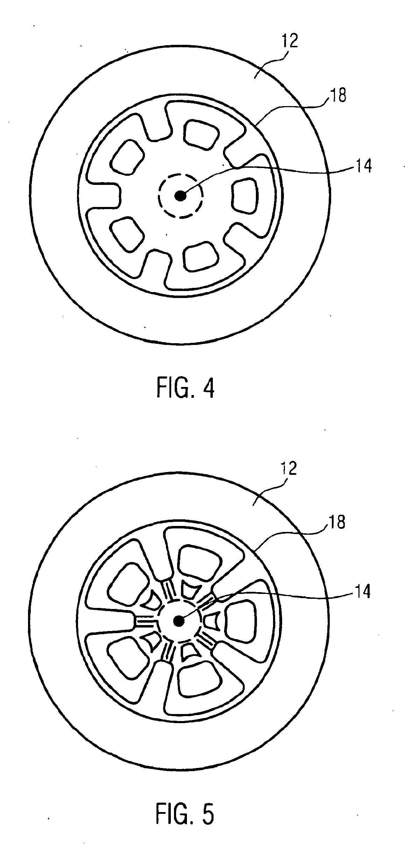

Wird ein derartig gerichtetes Licht auf den Boden 12, insbesondere den Bereich um die Mittellinie M, wo sich die Ansatzstelle 14 befindet, gerichtet, so erscheint rund um die Anspritzstelle 14 eine dunkle Außenkontur, wie sie in den Fig. 4 und 5 näher dargestellt ist. Dabei werden alle Teile des Behälterbodens dunkel abgebildet, bei denen die innere und die äußere Wandung nicht planparallel sind, sondern einen Keilwinkel ausbilden, wodurch das gerichtete Licht durch Brechung abgelenkt wird und nicht zur Kamera gelangt. Das Bild gemäß Fig. 4 ergibt sich, wenn stark gerichtetes Licht verwendet wird, während sich das Bild gemäß Fig. 5 ergibt, wenn schwächer gerichtetes Licht verwendet wird, wobei die Außenkontur 18 und der dunkle Fleck in der Mitte heller wirkt, so dass noch weitere Einzelheiten sichtbar sind.

Es wurde nun festgestellt, dass die Flächengröße innerhalb der dunklen Außenkontur 18 ein Maß für die Qualität des Streckblasvorganges darstellt, da die dunkle Außenkontur 18 einen unverstreckten und/oder nur leicht verstreckten Bereich umschließt, wobei die Größe dieses Bereiches ein Maß für die Qualität des Streckblasvorganges ist. Es wurde deshalb ein Richtwert für die Flächengröße des Bereiches 18 ermittelt, die einen qualitätsmäßig befriedigenden Behälter 9 anzeigt. Dieser Richtwert zeigt an, dass der Bereich 18 weder zu groß ist, d.h. zu viel unverstrecktes Material sich im Boden 12 befindet, das an anderer Stelle, beispielsweise an besonders empfindlichen Bereichen der Wandung, fehlt, noch dass sich zu wenig unverstrecktes oder nur leicht verstrecktes Material am Boden 12 befindet, was ein Anzeichen für eine unregelmäßige Erwärmung und eine erhöhte Wandstärke an anderer Stelle sein kann.

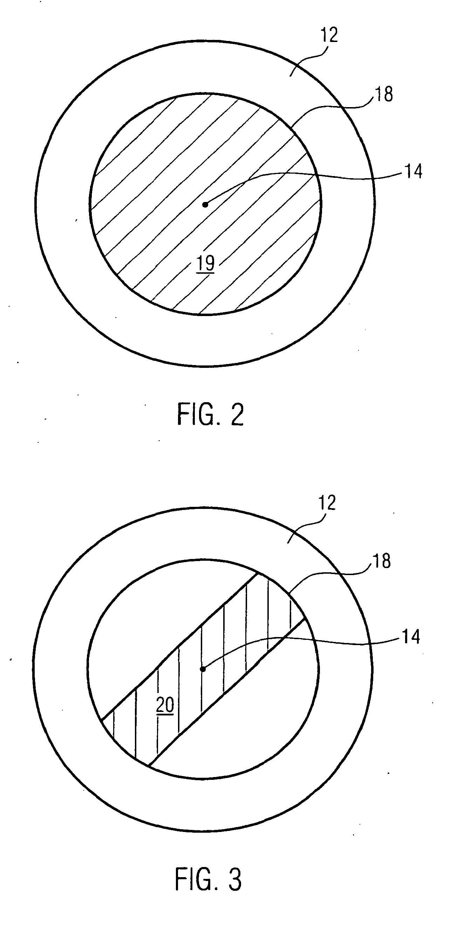

Zur Qualitätskontrolle wird die Flächengröße des Bereiches 18 entweder, wie Fig. 2 zeigt, dadurch bestimmt, dass die Gesamtgröße 19 der gesamten vom abgedunkelten Bereiches 18 eingeschlossenen Fläche ermittelt wird.

Es ist weiterhin möglich, die Flächengröße des unverstreckten Bereiches zu bestimmen, indem man nur die Flächengröße eines Teilbereiches 20 ermittelt, und von diesem Teilbereich 20 auf die Gesamtflächengröße schließt. Der Teilbereich 20 wird bevorzugt an einer repräsentativen, aussagekräftigen Stelle gemessen, in Fig. 3 ist ein Teilflächenbereich 20 gezeigt, der sich streifenförmig, symmetrisch zur Mittellinie M bzw. zur Anspritzstelle 14 über den gesamten unverstreckten Bereich 18 erstreckt.

Weitere Qualitätsmerkmale können aus dem dunkel abgebildeten Übergangsbereich zwischen unverstrecktem bzw. nur leicht verstrecktem Bereich in Bodenmitte und dem verstreckten Bereich an der Peripherie des Bodens ermittelt werden. Aussagekräftig für die Qualität des Streckblasvorganges sind die Breite, die Lage, die Form und der Abdunklungsgrad dieses Bereichs.

Die optische Einheit 6 kann gemäß einem nicht unter die Erfindung fallenden Beispiel auch als Polarisator zum Erzeugen polarisierten Lichts ausgebildet sein. Das polarisierte Licht ist in der Lage, Materialspannungen im Boden 12 sichtbar zu machen, so dass aus der An- und Abwesenheit von Materialspannungen in den unterschiedlichen Bereichen des Bodens 12 auf die Größe des unverstreckten und/oder nur leicht verstreckten Bereiches 18 geschlossen werden kann.

Die vom Sensor 7 empfangenen bzw. bestimmten Qualitätsmerkmale werden der Auswerteinrichtung 3 zugeführt. Die Auswerteinrichtung 3 vergleicht die Qualitätsmerkmale mit dem Richtwert und bestimmt, ob der vermessene Kunststoffbehälter 9 den Qualitätsanforderungen genügt oder verworfen werden muss. Zweckmäßigerweise liegt der Richtwert in Form eines Toleranzbereiches zwischen oberen und unteren Schwellenwerten vor.

Wurde festgestellt, dass ein Kunststoffbehälter 9 den Qualitätsanforderungen nicht genügt, so kann die Auswerteinrichtung 3 auch in das Herstellungsverfahren des Kunststoffbehälters 9 eingreifen und beispielsweise Prozessparameter regeln. Derartige Prozessparameter können beispielsweise die Heiztemperatur in einzelnen Heizzonen sein.

In Abwandlung der beschriebenen und gezeichneten Ausführungsbeispiele kann die Kontrollstation an jeder anderen, geeigneten Stelle angeordnet sein. Die Transporteinrichtung kann jede Konstruktion aufweisen, die eine Betrachtung des Bodens im Durchlichtverfahren gestattet, z.B. auch eine kettenartige Transporteinrichtung, oder eine Transporteinrichtung, welche die Behälter unterhalb der Mündung oder dem Tragring hält (strichpunktiert angedeutet in Fig. 1).

## Patentansprüche

1. Verfahren zur Qualitätskontrolle eines streckgeblasenen Kunststoffbehälters (9) durch optische Inspektion des Behälterbodens (12),
wobei die Materialverteilung (18, 19, 20) am Boden (12) des Kunststoffbehälters (9) durch Beleuchten sichtbar gemacht, mit einer oder mehreren insbesondere ortsauflösenden elektronischen Kamera(s) (7) aufgenommen und mit Bildverarbeitungsalgorithmen daraus Qualitätsmerkmale abgeleitet werden,
wobei die Materialverteilung über eine Erkennung eines Keilwinkels zwischen innerer und äußerer Oberfläche mit Hilfe von gerichtetem Licht sichtbar gemacht wird, wobei durch den Keilwinkel das gerichtete Licht durch Brechung abgelenkt wird und nicht zur Kamera (7) gelangt, so dass alle Teile des Bodens (12) dunkel abgebildet werden, die einen Keilwinkel ausbilden, und
wobei rund um eine Anspritzstelle (14) am Boden (12) eine dunkle Außenkontur (18) erscheint, die einen unverstreckten und/oder nur leicht verstreckten Bereich (19) umschließt,
**dadurch gekennzeichnet, dass**
die Flächengröße des unverstreckten und/oder nur leicht verstreckten Gesamtbereichs (19) oder eines ausgewählten unverstreckten und/oder nur leicht verstreckten Teilbereichs (20) am Boden (12) des Kunststoffbehälters (9) ermittelt wird,
und/oder die Flächengröße, Lage oder Stärke des Keilwinkels des Übergangsbereichs zwischen dem unverstrecktem und/oder nur leicht verstrecktem Bereich (19) und einem verstreckten Bereich am Boden (12) des Kunststoffbehälters (9) ermittelt wird,
und/oder die Form des Übergangsbereichs zwischen dem unverstrecktem und/oder nur leicht verstrecktem Bereich (19) und einem verstreckten Bereich am Boden (12) des Kunststoffbehälters (9) ermittelt wird.

2. Verfahren nach Anspruch 1, **dadurch gekennzeichnet, dass** die Beleuchtung den Behälterboden (12) beleuchtet und die elektronische Kamera (7) durch die Mündungsöffnung (15) auf den Boden (12) im Durchlichtverfahren blickt.

3. Verfahren nach einem der Ansprüche 1 bis 2, **dadurch gekennzeichnet, dass** einzelne Qualitätsmerkmale oder eine Kombination daraus mit vordefinierten Grenzwerten verglichen werden und bei Überschreitung der Grenzwerte eine Ausleitung der beanstandeten Behälter veranlasst wird.

4. Verfahren nach einem der Ansprüche 1 bis 3, **dadurch gekennzeichnet, dass** eine statistische Zuordnung der ermittelten Qualitätsmerkmale bzw. abgeleiteter Größen auf die jeweiligen mehrfach vorhandenen Produktionswerkzeuge in der Streckblasmaschine vorgenommen wird.

5. Verfahren nach einem der Ansprüche 1 bis 4, **dadurch gekennzeichnet, dass** Parameter des Streckblasverfahrens in Abhängigkeit von einem oder mehreren der festgestellten Qualitätsmerkmale geregelt werden.

6. Verfahren nach einem der Ansprüche 1 bis 5, **dadurch gekennzeichnet, dass** es mit der Inspektion des Behälterbodens (12) auf Verschmutzung, Blasen, Einschlüsse, Löcher, kristalline Bereiche oder Exzentrizität des Anspritzpunkts (14) innerhalb der Streckblasmaschine in einer gemeinsamen Kamerastation kombiniert wird.

## Claims

1. A method for controlling the quality of a stretch-blow-moulded plastic container (9) by optical inspection of the container base (12),
wherein the distribution of material (18, 19, 20) at the base (12) of the plastic container (9) is made visible by illumination, that it is recorded by one or by a plurality of camera(s) (7), especially spatially-resolving electronic camera(s) (7), and that quality features are derived therefrom by image processing algorithms,
wherein the distribution of material is made visible through a recognition of a wedge angle between inner and outer surfaces with the aid of directed light, wherein by the wedge angle the directed light is deflected by diffraction and does not arrive at the camera (7), such that all parts of the base (12) defining a wedge angle are imaged darkly, and
wherein a dark outer contour (18) will appear around the injection point (14) at the base (12), enclosing an unstretched and/or only slightly stretched region (19),
**characterized in that**
the surface area of the unstretched and/or only slightly stretched total region (19) or of a selected unstretched and/or only slightly stretched subregion (20) on the base (12) of the plastic container (9) is determined,
and/or the surface area, the position or the size of the wedge angle of the transition region between the unstretched and/or only slightly stretched region (19) and a stretched region on the base (12) of the plastic container (9) is determined,
and/or the shape of the transition region between the unstretched and/or only slightly stretched region (19) and a stretched region on the base (12) of the plastic container (9) is determined.

2. A method according to claim 1, **characterized in that** the illumination means illuminates the container base (12) and that the electronic camera (7) views the base (12) through the mouth opening (15) in a transmitted light process.

3. A method according to one of the claims 1 to 2, **characterized in that** individual quality features or a combination of such features is compared with predefined limits, and that, if the limit values are exceeded, the containers objected to are removed.

4. A method according to one of the claims 1 to 3, **characterized in that** the determined quality features and the derived magnitudes, respectively, are statistically associated with the respective multiply provided production tools in the stretch-blow-moulding machine.

5. A method according to one of the claims 1 to 4, **characterized in that** parameters of the stretch-blow-moulding process are controlled in response to one or a plurality of the quality features determined.

6. A method according to one of the claims 1 to 5, **characterized in that** the method is combined with the inspection of the container base (12) with regard to dirt, bubbles, inclusions, holes, crystalline areas or eccentricity of the injection point (14) within the stretch-blow-moulding machine in a common camera station.

## Revendications

1. Procédé pour assurer le contrôle qualité d'un récipient ou contenant (9) en matière plastique obtenu par étirage soufflage, grâce à une inspection optique du fond de contenant (12), procédé
d'après lequel on rend visible la répartition de matière (18, 19, 20) au niveau du fond (12) du contenant (9) en matière plastique, par éclairage de celui-ci, on enregistre cette répartition par une ou plusieurs caméras (7) électroniques, notamment à résolution spatiale, et on en déduit des caractéristiques de qualité à l'aide d'algorithmes de traitement d'image,
d'après lequel la répartition de matière est visualisée grâce à la détection d'un angle de coin ou angle au sommet entre la surface intérieure et la surface extérieure, à l'aide de lumière directionnelle, cette lumière directionnelle étant déviée par réfraction par ledit angle de coin et ne parvenant pas à la caméra (7), de sorte que toutes les parties du fond (12), qui forment un angle de coin, sont représentées en sombre, et
d'après lequel tout autour d'un point d'injection (14) sur le fond (12), apparaît un contour extérieur sombre (18) qui enferme ou entoure une zone (19) non étirée et/ou seulement faiblement étirée,
**caractérisé en ce que**
l'on détermine l'aire de la zone totale (19) non étirée et/ou seulement faiblement étirée, ou d'une zone partielle (20) non étirée et/ou seulement faiblement étirée, sélectionnée, du fond (12) du contenant (9) en matière plastique,
et/ou l'on détermine l'aire, la position, ou la grandeur de l'angle de coin, de la zone de transition entre la zone (19) non étirée et/ou seulement faiblement étirée et une zone étirée sur le fond (12) du contenant (9) en matière plastique,
et/ou l'on détermine la forme de la zone de transition entre la zone (19) non étirée et/ou seulement faiblement étirée et une zone étirée sur le fond (12) du contenant (9) en matière plastique.

2. Procédé selon la revendication 1, **caractérisé en ce que** l'éclairage éclaire le fond (12) du contenant, et la caméra électronique (7) est dirigée sur le fond (12) à travers l'ouverture d'embouchure (15) selon un processus en lumière transmise ou éclairage diascopique.

3. Procédé selon l'une des revendications 1 à 2, **caractérisé en ce que** l'on compare des caractéristiques de qualité individuelles, ou une combinaison de celles-ci, à des valeurs de seuil prédéfinies, et en cas de dépassement des valeurs de seuil, on produit l'exclusion des contenants incriminés.

4. Procédé selon l'une des revendications 1 à 3, **caractérisé en ce que** l'on effectue une affectation statistique des caractéristiques de qualité déterminées ou de grandeurs qui en sont dérivées, aux outillages de production respectifs présents de multiples fois dans la machine d'étirage-soufflage.

5. Procédé selon l'une des revendications 1 à 4, **caractérisé en ce que** l'on règle des paramètres du procédé d'étirage-soufflage en fonction d'une ou de plusieurs des caractéristiques de qualité constatées.

6. Procédé selon l'une des revendications 1 à 5, **caractérisé en ce qu'**il est combiné avec l'inspection du fond (12) du contenant quant à un encrassement, à des bulles, des inclusions, des trous, des zones cristallines ou une excentricité du point d'injection (14) à l'intérieur de la machine d'étirage-soufflage, dans un poste de caméra commun.
